# EUROPÄISCHE PATENTSCHRIFT

(11) **EP 3 951 219 B1**
(45) Veröffentlichungstag und Bekanntmachung des Hinweises auf die Patenterteilung: **15.05.2024**
(21) Anmeldenummer: 21186484.8
(22) Anmeldetag: 19.07.2021
(51) Int. Cl.: F16K 1/226, F16K 37/00

(54) **ABSPERRKLAPPE**
SHUT-OFF VALVE
VANNE D'ARRÊT

(30) Priorität: 03.08.2020 DE 102020120446
(43) Veröffentlichungstag der Anmeldung: 09.02.2022
(73) Patentinhaber: GEMÜ Gebr. Müller Apparatebau GmbH & Co. Kommanditgesellschaft, 74653 Ingelfingen (DE)
(72) Erfinder: Flögel, Werner, 74677 Dörzbach (DE); Stegmeier, Axel, 74214 Schöntal (DE); Mütsch, Michael, 74523 Schwäbisch Hall (DE); Meyer, Andreas, 66111 Saarbrücken (DE); Seelecke, Stefan, 66119 Saarbrücken (DE)
(74) Vertreter: DREISS Patentanwälte PartG mbB

(56) Entgegenhaltungen:
- EP-A1- 3 824 206
- DE-B3-102019 101 173
- US-A- 3 355 728

## Beschreibung

Die Erfindung betrifft eine Absperrklappe.

EP 3 824 206 A1 offenbart eine Dichtmanschette zur Anordnung zwischen einem Armaturkörper einer Absperrklappe und einer zu dem Armaturkörper verdrehbaren und einen Fluss eines Prozessfluids begrenzenden Klappe, wobei die Dichtmanschette eine Sensoranordnung umfasst, und wobei die Sensoranordnung dazu eingerichtet ist, wenigstens ein Signal bereitzustellen, welches eine Dichtheit des Absperrklappenventils vor einem Eintreten einer inneren oder äußeren Leckage charakterisiert.

DE 10 2019 101 173 B3 offenbart, dass eine Kontaktspannung eines Dichtungselements indirekt durch eine Abstandsmessung zwischen Dichtungselement und abzudichtendem Bauteil gemessen wird.

US 3,355,728 A offenbart eine Ventilstruktur, umfassend eine hohle Welle, eine auf der Welle montierte Scheibe, eine in der Scheibe eingebettete erste Spule, wobei die Spule Leitungen aufweist, die sich von dieser durch die hohle Welle hindurch zur Verbindung mit einer Wechselspannungsquelle erstrecken, einen Ventilkörper mit einem darin ausgebildeten Durchgang, einen auf dem Ventilkörper montierten Ventilsitz, eine zwischen dem Ventilsitz und dem Ventilkörper angeordnete zweite Spule, wobei die zweite Spule Leitungen aufweist, die sich von ihr aus durch den Durchgang zur Verbindung mit einer Anzeigevorrichtung erstrecken, wobei die Scheibe so ausgelegt ist, dass sie sich in ihrer radialen Ebene dreht, um dadurch ihre Position in Bezug auf den Ventilsitz zu verändern und die Größe einer Spannung zu verändern, die in der zweiten Spule durch die erste Spule induziert wird, nachdem die erste Spule durch die Spannungsquelle erregt wird, wobei die Größe der induzierten Spannung von der Position der Scheibe und des Ventilsitzes abhängt.

Es ist bekannt, dass innerhalb einer weichdichtenden Klappenarmatur gemäß DIN EN 593 Kraftwirkungen auf die Manschette in unterschiedlichen Wirkrichtungen auftreten. Die Kräfte wirken beispielsweise durch den Mediendruck von innen nach außen senkrecht auf die Manschettenoberfläche.

Durch die Einspannung während der Montage wirken Kräfte seitlich auf die Manschette. Im Betrieb wirken Kräfte während der Schließ-/Öffnungsbewegung der Klappenscheibe auf die Manschette. Diese Bewegungskräfte erzeugen in verschiedenen Wirkungsrichtungen Zug-/Druck-/Torsions-/Dehnungskräfte und Verformungen der Dichtmanschette.

Das der Erfindung zugrundeliegende Problem wird durch eine Absperrklappe gemäß dem Anspruch 1 gelöst. Vorteilhafte Weiterbildungen finden sich in den Unteransprüchen, der nachfolgenden Beschreibung von Beispielen sowie in der Zeichnung.

Ein Aspekt der Beschreibung ist auf eine Absperrklappe gerichtet. Die Absperrklappe umfasst: einen Armaturkörper; eine innerhalb einer Durchgangsöffnung des Armaturkörpers angeordnete und einen inneren Durchflussraum für Prozessfluid begrenzende Dichtmanschette; insbesondere eine drehbar gelagerte Absperrscheibe, die je nach Drehwinkel eine Durchgangsöffnung der Dichtmanschette verschließt oder öffnet; und einer Sensoranordnung mit wenigstens einem sich flächig zwischen einer nach außen gewandten Oberfläche der Dichtmanschette und einer nach innen gewandten Oberfläche des Armaturkörpers erstreckenden Sensorabschnitt zur Erzeugung eines Sensorsignals, welches eine auf den Sensorabschnittwirkende Kraft charakterisiert.

Drückt ein im Durchflussraum befindlicher Gegenstand, insbesondere die Klappenscheibe auf die Dichtmanschette, so leitet die Dichtmanschette das eingeleitete Kraftmoment zu dem wenigstens einen Sensorabschnitt weiter. Das die Kraft auf den Sensorabschnitt charakterisierende Sensorsignal ermöglicht eine Diagnose des Zustands der Absperrklappe.

Durch die Anordnung des wenigstens einen Sensorabschnitts zwischen den Oberflächen von Dichtmanschette und Armaturkörper beschränken sich die Konstruktionsfreiheitsgrade beispielsweise auf die Bereitstellung der jeweiligen Oberflächen. Damit ergeben sich sowohl aus konstruktiver Sicht als auch aus Funktionssicht Freiheitsgrade für den Armaturkörper als auch die Dichtmanschette.

Ein vorteilhaftes Beispiel zeichnet sich dadurch aus, dass die Sensoranordnung umfasst: eine Mehrzahl von sich flächig zwischen der jeweiligen nach außen gewandten Oberfläche der Dichtmanschette und der jeweiligen nach innen gewandten Oberfläche des Armaturkörpers erstreckenden Sensorabschnitten zur Erzeugung eines jeweiligen Sensorsignals, welches eine auf den jeweiligen Sensorabschnittwirkende Kraft charakterisiert.

Vorteilhaft ermöglichen diese sich zumindest abschnittsweise nicht überlappenden Sensorabschnitte die Ermittlung eines ortsdifferenzierten Druckbildes.

Ein vorteilhaftes Beispiel zeichnet sich dadurch aus, dass wenigstens eine Gruppe von Sensorabschnitten über einen inneren Umfang des Armaturkörpers verteilt zwischen der Dichtmanschette und dem Armaturkörper angeordnet sind. Vorteilhaft lassen sich durch die derart angeordneten Sensorabschnitte umfangsseitig Unterschiede in den auf die Dichtmanschette wirkenden Kräften feststellen. Entsprechend lassen sich dadurch mögliche Fehlerursachen unterscheiden und Betriebszustände zu detektieren.

Des Weiteren ist es möglich, in der erreichten Schließposition der Klappenscheibe festzustellen, ob eine Materialermüdung der Dichtmanschette in einem Kreisbogensegment vorliegt, wenn beispielsweise zwei Sensorabschnitte die Materialermüdung indizierende, unterschiedliche Signale liefern.

Ein vorteilhaftes Beispiel zeichnet sich dadurch aus, dass wenigstens eine Gruppe von Sensorabschnitten parallel zu einer Mittenachse der Absperrklappe verteilt zwischen der Dichtmanschette und dem Armaturkörper angeordnet sind.

Vorteilhaft lassen sich durch die derart angeordneten Sensorabschnitte Unterschiede in den auf die Dichtmanschette wirkenden Kräften parallel zur Mittenachse der Absperrklappe feststellen. Entsprechend lassen sich dadurch mögliche Fehlerursachen unterscheiden. Damit wird eine redundante Ausführung der Sensoranordnung parallel zur Mittenachse geschaffen, was die Verfügbarkeit erhöht.

Ein vorteilhaftes Beispiel zeichnet sich dadurch aus, dass die Gruppe von Sensorabschnitten durch eine zur Mittenachse lotrecht verlaufende und in einer Rotationsachse einer Klappenscheibe liegende gedachte Ebene voneinander getrennt sind.

Vorteilhaft sind die Sensorabschnitte so voneinander getrennt angeordnet, dass die Klappenscheibe bei einem Erreichen der Schließposition nur einen von beispielsweise zwei parallel zur Mittenachse angeordneten Sensorabschnitten überstreicht. Wird bei dem anderen der beispielsweise zwei Sensorabschnitte ebenfalls eine Kraft registriert, so lässt sich auf einen Störkörper oder Ablagerungen schließen. Weiterhin können entgegengesetzte Kraftverläufe der Sensorabschnitte zu einer eindeutigen Bewegungsrichtung der Scheibe oder auch unterschiedliche Betriebszustände vor und nach der Absperrscheibe detektiert werden.

Ein vorteilhaftes Beispiel zeichnet sich dadurch aus, dass der wenigstens eine Sensorabschnitt zur Ermittlung des Sensorsignals Elektroden und ein zwischen den Elektroden angeordnetes flexibles Dielektrikum umfasst.

Durch das Kraftmoment wird der Sensorabschnitt durch das flexible Dielektrikum wenigstens abschnittsweise zusammengedrückt oder gedehnt, wodurch sich der Abstand der Elektroden und folglich die elektrisch messbare Kapazität zwischen den beiden Elektroden ändern. Die Kapazität ist also allein für sich ein Maß für den radial von innen auf die Dichtmanschette aufgebrachten Druck bzw. für die Kraft, die auf die flächige Ausdehnung des Sensorabschnitts wirkt.

Ein vorteilhaftes Beispiel zeichnet sich dadurch aus, dass das Dielektrikum abschnittsweise einer gedachten Kreiszylindermantelfläche eines gedachten Kreiszylinders folgt, dessen Zylinderachse mit der Mittenachse der Absperrklappe zusammenfällt.

Durch die Zylindermantelflächenform wird der auf den jeweiligen Sensorabschnitt wirkende Druck in radialer Richtung ermittelt.

Durch die stirnseitigen Anlageflächen im Bereich der Rastabschnitte wird der auf den jeweiligen Sensorabschnitt wirkende Druck in axialer Richtung ermittelt. Dadurch lassen sich auch korrekte Montageposition, Fluchtungsfehler der Flansche sowie veränderte Eigenschaften an der Manschette bewerten.

Ein vorteilhaftes Beispiel zeichnet sich dadurch aus, dass ein Elastizitätsmodul der Dichtmanschette kleiner als ein Elastizitätsmodul des Dielektrikums ist.

Vorteilhaft wird dadurch erreicht, dass die innen auf die Dichtmanschette wirkenden Kräfte nicht durch die Dichtmanschette gedämpft an den Sensorabschnitt weitergegeben werden. Vielmehr wird durch die gewählten Elastizitätsmodule die Sensitivität des wenigstens einen Sensorabschnitts erhöht.

Ein vorteilhaftes Beispiel zeichnet sich dadurch aus, dass die Absperrklappe umfasst: eine verdrehbare und zur

Begrenzung eines Flusses eines Prozessfluids ausgebildete Klappenscheibe; einen Drehsensor, welcher zur Ermittlung einer Drehposition der Klappenscheibe ausgebildet ist; eine Auswerteeinheit, welche zur Ermittlung eines die Belastung der Dichtmanschette charakterisierenden Indikators in Abhängigkeit von der Drehposition und in Abhängigkeit von dem wenigstens einen Sensorsignal des Sensorabschnitts ausgebildet ist.

Vorteilhaft wird durch die Berücksichtigung sowohl der Drehposition der Klappenscheibe als auch des den Druck auf den Sensorabschnitt charakterisierenden Sensorsignals erreicht, dass zwischen verschiedenen Fehler- oder Betriebsbildern unterschieden werden kann.

Ein vorteilhaftes Beispiel zeichnet sich dadurch aus, dass der Indikator eine Scherbeanspruchung der Dichtmanschette indiziert, wenn mittels des Sensorsignals des wenigstens einen Sensorabschnitts eine über einen Zeitraum sich verändernde Kraft und mittels des Drehsensors eine in dem Zeitraum erfolgende Drehbewegung der Klappenscheibe ermittelt wird.

Vorteilhaft kann der mittels des Sensorsignals des Sensorabschnitts in radialer Richtung erfasste Druck als Beanspruchung der Dichtmanschette parallel zur Mittenachse interpretiert werden.

Erfindungsgemäß umfasst die Absperrklappe wenigstens ein mit dem Armaturkörper verbindbares Trägerelement, welches den wenigstens einen Sensorabschnitt der Sensoranordnung umfasst.

Das wenigstens eine Trägerelement ermöglicht, dass der wenigstens eine Sensorabschnitt kontrolliert in die Absperrklappe einbringbar ist. So verringert sich der Einfluss des Anbringens der Dichtmanschette auf die Position der wenigstens einen Sensorabschnitts. So wird beispielsweise eine Verschiebung des Sensorabschnitts verhindert.

Darüber hinaus wird auch die Führung der Signalleitungen durch das Trägerelement vereinfacht. So dient in einem Beispiel eine Durchgangsbohrung durch den Armaturkörper zur Durchführung der Signalleitungen, die eine Auswerteeinrichtung und den wenigstens einen Sensorabschnitt miteinander verbinden. Folglich vereinfacht das Trägerelement die elektrische Anbindung des wenigstens einen Sensorabschnitts.

Werden die Sensorabschnitte an dem Armaturenkörper mittels des Trägerelements fixiert und so zu der Dichtmanschette in Bezug gebracht, entsteht eine wiederverwendbare Anordnung der Sensoranordnung. Ein Vorteil wird hier insbesondere im Montage- und Wartungsvorgang gesehen. Zur Montage wird die Dichtmanschette stark verformt. Durch Fixierung der Sensorabschnitte am Armaturkörper ist die Manschettenmontage losgelöst vom Sensorsystem, wodurch Beschädigungen der Sensoranordnung reduziert werden.

Ein vorteilhaftes Beispiel zeichnet sich dadurch aus, dass das wenigstens eine Trägerelement formschlüssig und/oder lösbar mit dem Armaturkörper verbunden ist.

Durch die Formschlüssigkeit kann eine Position des Trägerelements und des Sensorabschnitts konstruktiv vorgegeben werden. Durch die Lösbarkeit wird ermöglicht, dass das wenigstens eine Sensorelement getauscht werden kann.

Ein vorteilhaftes Beispiel zeichnet sich dadurch aus, dass das wenigstens eine Trägerelement eine Mehrzahl von entlang wenigstens einer Längsseite voneinander beabstandeten Rastabschnitten, welche in wenigstens eine zugeordnete Ausnehmung des Armaturkörpers eingreifen, umfasst.

Durch die Beabstandung der Rastabschnitte wird die Befestigung und Entfernung des Trägerelements vereinfacht, da eine flexible Verformung des Trägerelements im Bereich zwischen benachbarten Rastabschnitten ermöglicht wird.

Ein vorteilhaftes Beispiel zeichnet sich dadurch aus, dass der wenigstens eine Sensorabschnitt zwischen dem Trägerelement und der nach außen gewandten Oberfläche der Dichtmanschette angeordnet ist.

Vorteilhaft wird so die über die Dichtmanschette eingeleitete Kraft auf den wenigstens einen Sensorabschnitt geleitet.

Ein vorteilhaftes Beispiel zeichnet sich dadurch aus, dass der wenigstens eine Sensorabschnitt zwischen dem Trägerelement und der nach innen gewandten Oberfläche des Armaturkörpers angeordnet ist.

Vorteilhaft ist der wenigstens eine Sensorabschnitt geschützt zwischen dem Trägerelement und dem Armaturkörper angeordnet. Damit wird einer Zerstörung oder Beschädigung des Sensorabschnitts vorgebeugt.
- Figur 1: zeigt eine schematische Schnittansicht einer Absperrklappe;
- Figuren 2a bis 2c: zeigen eine jeweilige Sensoranordnung;
- Figur 2d: zeigt ein schematisches Blockdiagramm;
- Figuren 3a bis 3c: zeigen jeweils eine Schnittansicht eines Sensorabschnitts; und
- Figuren 4a und 4b: zeigen jeweils eine Anordnung eines Trägerelements an einem Armaturkörper.

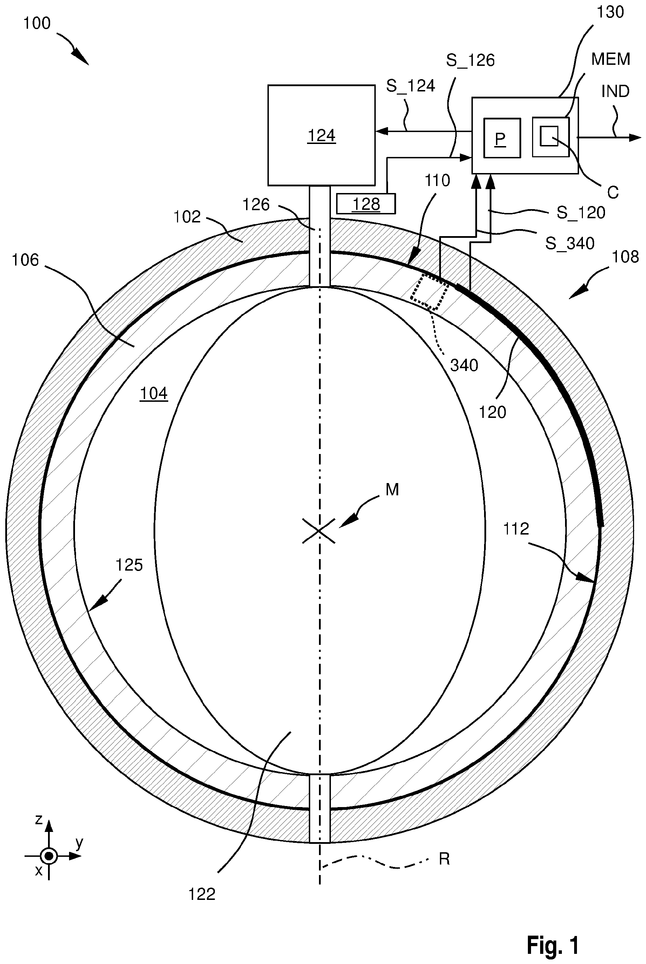

Figur 1 zeigt in schematischer Schnittansicht eine weichdichtende Absperrklappe 100. Eine innerhalb einer Durchgangsöffnung eines Armaturkörpers 102 angeordnete Dichtmanschette 106 begrenzt, insbesondere gemeinsam mit einer Klappenscheibe 122, einen inneren Durchflussraum 104 für Prozessfluid.

Eine Sensoranordnung 108 umfasst wenigstens einen sich flächig zwischen einer nach außen gewandten Oberfläche 110 der Dichtmanschette 106 und einer nach innen gewandten Oberfläche 112 des Armaturkörpers 102 erstreckenden, folienartigen Sensorabschnitt 120. Der Sensorabschnitt 120 ist zur Erzeugung eines Sensorsignals S_120 ausgebildet. Das Sensorsignal S_120 charakterisiert auf die flächige Ausdehnung des Sensorabschnitts 120 wirkende Kräfte. In anderen Worten charakterisiert das Sensorsignal auf den Sensorabschnitt 120 wirkende Kräfte, die auf den flächigen Sensorabschnitt 120 in einer zu einer Mittenachse M radialen Richtung, also entlang eines jeweiligen Normalenvektors von gedachten Segmenten der gekrümmten Fläche des Sensorabschnitts 120, wirken, beispielsweise zusammendrücken oder dehnen. Die Mittenachse M der Absperrklappe 100 verläuft durch den Mittelpunkt des kreisförmig ausgebildeten Armaturkörpers 102 und/oder durch den Mittelpunkt der kreisförmig ausgebildeten Dichtmanschette 106.

Die Sensoranordnung 108 umfasst wenigstens einen sich zumindest abschnittsweise flächig in einer Lotebene der Mittenachse M zwischen der Dichtmanschette 106 und dem Armaturkörpers 102 erstreckenden, folienartigen Sensorabschnitt 340. Der Sensorabschnitt 340 ist zur Erzeugung eines Sensorsignals S_340 ausgebildet.

Der wenigstens eine Sensorabschnitt 120, 340 ist auch als kapazitiver Flächensensor bezeichenbar. Der Sensorabschnitt 120, 340 ist in seiner Fläche gummielastisch. Der Sensorabschnitt 120, 340 kann einzeln ausgeführt sein oder in Gruppen als die Sensoranordnung 108 zusammengeschaltet werden. Die Sensoranordnung 108 aus mehreren Sensorabschnitten 120, 340 liefert je Sensorabschnitt 120 das eigenständiges Signal S_120, S_340. Die Sensorabschnitte 120, 340 erfassen die zeitlichen Kraftverläufe abhängig von der Güte der Dichtmanschette 106 und den Betriebsbedingungen. In einem Beispiel sind an der Eingangs- und Ausgangsseite der Absperrklappe 100 wenigstens ein Sensorabschnitt 120, 340 vorgesehen.

In einem Beispiel sind Mehrpunktmessungen im Umfang der Dichtmanschette 106 vorgesehen, wobei der jeweilige flächig ausgeprägte Sensorabschnitte 120, 340 als Einzelsensor oder Mehrfachsensor verwendbar ist. Mehrpunktmessungen am Umfang der Dichtmanschette 106 ermöglichen die Erkennung von Kraftänderungen an verschiedenen Punkten durch Auswertung der Sensorsignale zu Bezugswerten, und so ein genaueres Bild der Veränderungen. Die Auflösung der Messpunktabstände ist abhängig von der Steifigkeit der verwendeten Dichtmanschette 106.

Innerhalb der Dichtmanschette 106 ist die um eine Rotationsachse R verdrehbare Klappenscheibe 122 angeordnet, die, wenn sie in einer Drehposition innerhalb der Zeichenebene der Figur 1 liegt, den Durchflussraum 104 verschließt. Die Klappenscheibe 122 wird von einem manuellen, pneumatischen oder elektrischen Antrieb 124 um die Rotationsachse R rotiert. In einem weiteren Beispiel ist der Antrieb 124 manuell angetrieben und umfasst eine Handbetätigung. Der Armaturkörper 102 stellt einen inneren Anschlussbereich für die elastische Dichtmanschette 106 bereit. Die elastische Dichtmanschette 106 umfasst ein elastisches Material wie beispielsweise ein lose eingelegt, vulkanisiertes oder eingeklebtes Elastomer. Der Armaturkörper 102 und die Klappenscheibe 122 sind beispielsweise aus einer Metalllegierung gefertigt. Die Dichtmanschette 106 umfasst einen proximalen Sitz zum Anliegen der verdrehbaren Klappenscheibe 122. Der Sitz wird von einem umlaufenden Klappendichtabschnitt 125 der Dichtmanschette 106 bereitgestellt. Eine Welle 126 ist drehfest mit der Klappenscheibe 122 verbunden und zu dem Armaturkörper 102 drehbar gelagert. Die Welle 126 ist mit dem Antrieb 124 verbunden. Die Dichtmanschette 106 umfasst in einem Wellendichtabschnitt eine Durchgangsöffnung für die Welle 126. Die Klappenscheibe 122 ist in dem gezeigten Zustand schräg gestellt und liegt nicht an dem Sitz an, womit die Klappenscheibe 122 und der Sitz Querschnitte freigeben, durch welche das Prozessfluid fließen kann. Wird die Klappenscheibe 122 verdreht und auf den Sitz aufgedrückt, so wird der Durchflussraum 104 verschlossen.

Die Absperrklappe 100 umfasst die Sensoranordnung 108, welche dazu eingerichtet ist, das wenigstens eine Signal S_120 zu ermitteln. Das Signal S_120 charakterisiert eine Dichtwirkung der Dichtmanschette 106 nach innen. Die Dichtwirkung der Dichtmanschette 106 wird beispielsweise durch eine verfügbare Elastizität des Materials der Dichtmanschette 106 charakterisiert. Die Elastizität wird in radialer Richtung ausgehend von der Mittenachse M und der axialen Richtung der Dichtmanschette 106 gemessen. In einem weiteren Beispiel wird die Dichtwirkung der Dichtmanschette 106 durch eine Materialausdehnung der Dichtmanschette 106 charakterisiert. Die Materialausdehnung wird beispielsweise in Umfangsrichtung und/oder in radialer Richtung ausgehend von der gedachten Mittenachse M gemessen. Die Dichtwirkung der Dichtmanschette 106 wird insbesondere durch folgende Informationen charakterisiert: Volumenreduktion durch Schrumpfen des Materials, Volumenreduktion durch Quellen des Materials, abrasive Beschädigung durch Materialverlust, Undichtigkeit nach außen durch Veränderungen an Dichtkontaktstellen, rissartige Beschädigungen, Materialgefügeänderungen, Materialstrukturänderungen.

Das Signal S_120 wird beispielsweise mittels eines Messgliedes, welches Teil des Sensorabschnitts 120 ist, bereitgestellt. In einem anderen Beispiel wird das Signal S_120 durch ein Steuergerät bzw. eine Auswerteeinheit 130 oder eine entfernt von der Dichtmanschette 106 angeordnetes Messglied ermittelt.

Das Signal S_120 wird an das Steuergerät bzw. die Auswerteeinheit 130 übermittelt. Die Auswerteeinheit 130 umfasst einen Speicher MEM und einen Prozessor P, wobei auf dem Speicher MEM ein Computerprogramm C abgelegt ist, welches die in dieser Beschreibung erläuterten Verfahren ausführt. Beispielsweise ermittelt das die Auswerteeinheit 130 in Abhängigkeit von dem Signal S_120 einen Indikator IND, welcher die Dichtwirkung der Dichtmanschette charakterisiert. Der Indikator IND kann das Signal S_120 umfassen oder der Indikator IND wird von dem Signal S_120 abgeleitet und zeigt eine ausreichende oder mangelhafte innere Dichtwirkung der Dichtmanschette 106 an. Der bereitgestellte Indikator IND kann beispielsweise an entfernt angeordnete Netzwerkeinheiten übermittelt werden, um Gegenmaßnahmen gegen die mangelnde Dichtwirkung der Dichtmanschette 106 einzuleiten. Auf diese Art und Weise kann ein Bestellvorgang beim Hersteller der Dichtmanschette 106 ausgelöst werden und/oder es werden Maßnahmen vorbereitet, um den Tausch der Dichtmanschette 106 durchzuführen.

Die Auswerteeinheit 130 übermittelt ein Signal S_124 an den elektrischen Antrieb 124, um die Klappenscheibe 122 um deren Drehachse R zu verdrehen. In einem Beispiel ermittelt Die Auswerteeinheit 130 den bereitgestellten Indikator IND in Abhängigkeit von dem Signal S_120 der Sensoranordnung 108 der Dichtmanschette 106 und in Abhängigkeit von der mittels eines Drehsensors 128 ermittelten Drehposition S_128 der Klappenscheibe 122. So kann beispielsweise ein bei der Drehposition S_128 vorbestimmter Soll-Druck auf den Sitz mit einem Ist-Druck, welcher durch das Signal S_120 repräsentiert wird, verglichen werden. Überschreitet eine Abweichung zwischen dem Soll-Druck und dem Ist-Druck einen vorab bestimmten Schwellwert, so zeigt der Indikator IND eine mangelnde Dichtwirkung der Dichtmanschette 106 an.

Der Indikator IND indiziert beispielsweise eine Scherbeanspruchung der Dichtmanschette 106 parallel zur Mittenachse M, wenn mittels des Sensorsignals S_120 des wenigstens einen Sensorabschnitts 120 eine über einen Zeitraum sich verändernde Kraft und mittels des Drehsensors 128 eine in dem Zeitraum erfolgende Drehbewegung der Klappenscheibe 122 ermittelt wird.

Der Indikator IND indiziert beispielsweise eine Druckbeanspruchung der Dichtmanschette 106 radial zur Mittenachse M, wenn mittels des Sensorsignals S_120 des wenigstens einen Sensorabschnitts 120 eine über einen Zeitraum sich nicht verändernde Kraft und mittels des Drehsensors 128 eine in dem Zeitraum fixe Drehposition der Klappenscheibe 122 ermittelt wird.

Der Sensorabschnitt 120 ist in seiner Form, also seinen geometrischen Abmessungen flexibel, damit anpassbar an unterschiedliche Geometrien. Applikationsabhängig können einzelne oder mehrere gleichartige/ähnliche Sensorabschnitten 120 zur Erfassung der Signale verwendet werden.

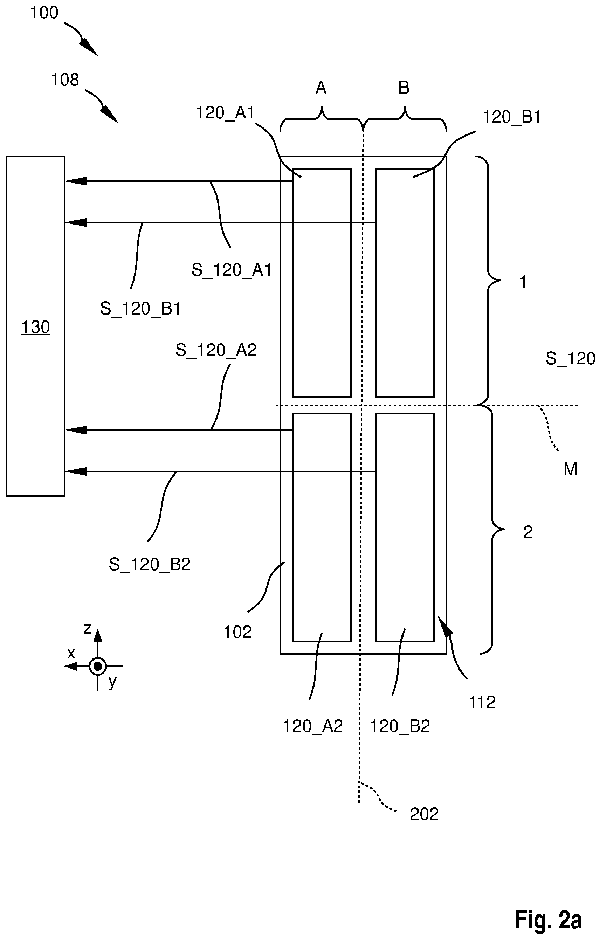

Figur 2a zeigt in einer schematischen Ansicht die Absperrklappe 100 aus Sicht einer Ebene durch die Rotationsachse R der Klappenscheibe ohne die Dichtmanschette 106. Die Sensoranordnung 108 umfasst eine Mehrzahl von sich flächig zwischen der jeweiligen nach außen gewandten Oberfläche 110 der Dichtmanschette 106 und der jeweiligen nach innen gewandten Oberfläche 112 des Armaturkörpers 102 erstreckenden Sensorabschnitten 120_A1, 120_A2, 120_B1, 120_B2 zur Erzeugung eines jeweiligen Sensorsignals S_120_A1, S_120_A2, S_120_B1, S_120_B2, welches eine auf die flächige Ausdehnung des Sensorabschnitts 120 bzw. den jeweiligen Sensorabschnitt 120_A1, 120_A2, 120_B1, 120_B2 in zu einer Mittenachse M radial wirkende Kraft charakterisiert.

Eine erste Gruppe A, B von Sensorabschnitten 120_A1, 120_A2 bzw. 120_B1, 120_B2 ist verteilt über einen inneren Umfang des Armaturkörpers 102 zwischen der Dichtmanschette 106 und dem Armaturkörper 102 angeordnet sind.

Eine zweite Gruppe 1, 2 von Sensorabschnitten 120_A1, 120_B1 bzw. 120_A2, 120_B2 ist parallel zu der Mittenachse M der Absperrklappe 100 verteilt zwischen der Dichtmanschette 106 und dem Armaturkörper 102 angeordnet.

Die zweite Gruppe 1, 2 von Sensorabschnitten 120_A1, 120_B1 bzw. 120_A2, 120_B2 ist durch eine zur Mittenachse M lotrecht verlaufende und in der Rotationsachse R der innerhalb der Dichtmanschette 106 angeordneten Klappenscheibe 122 liegende gedachte Ebene 202 voneinander getrennt.

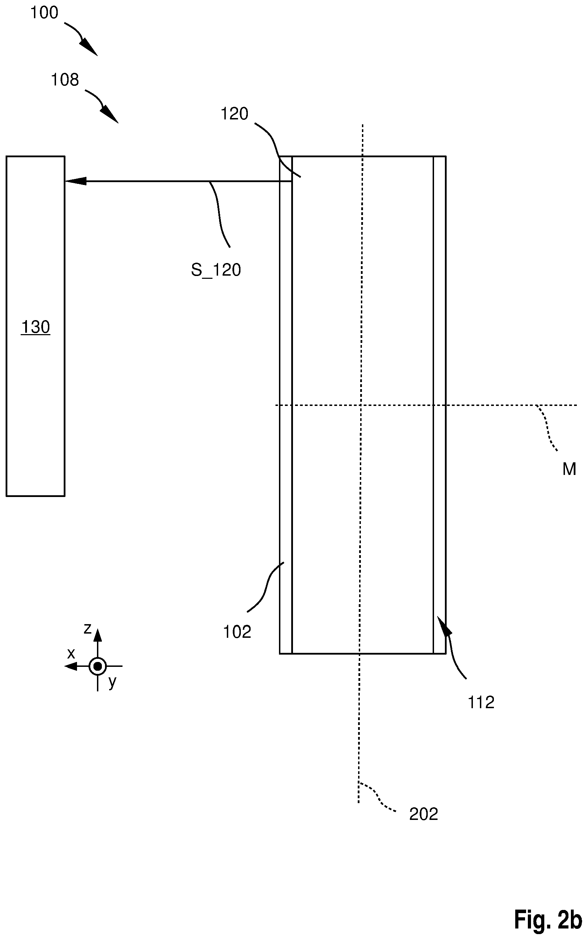

Figur 2b zeigt in einer schematischen Ansicht die Absperrklappe 100 aus Sicht der Ebene durch die Rotationsachse R der Klappenscheibe ohne die Dichtmanschette 106. Der Sensorabschnitt 120 ist einteilig ausgeführt und läuft beispielweise ringförmig um die Mittenachse M.

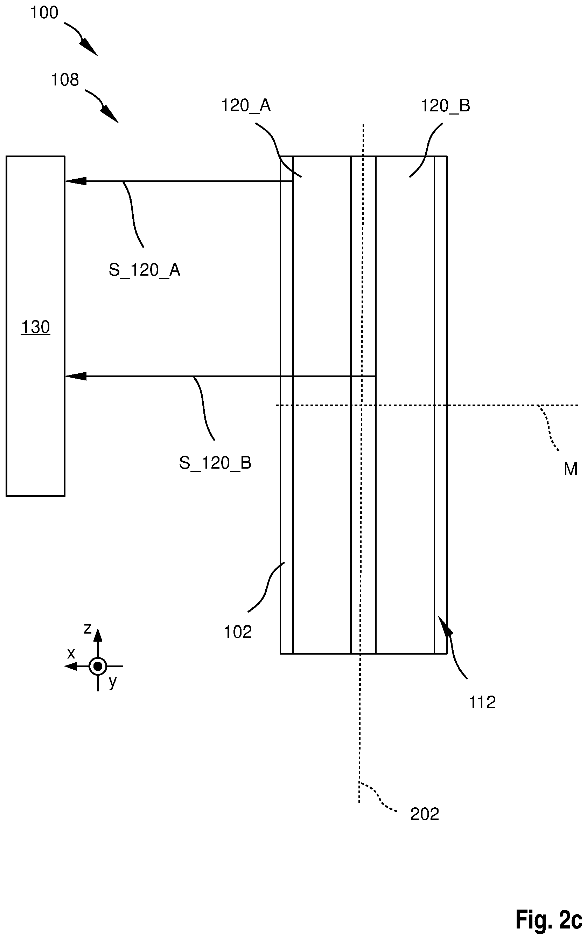

Figur 2c zeigt in einer schematischen Ansicht die Absperrklappe 100 aus Sicht der Ebene durch die Rotationsachse R der Klappenscheibe ohne die Dichtmanschette 106. Zwei Sensorabschnitte 120_A, 120_B laufen beispielweise ringförmig um die Mittenachse M und sind durch die Ebene 202 getrennt.

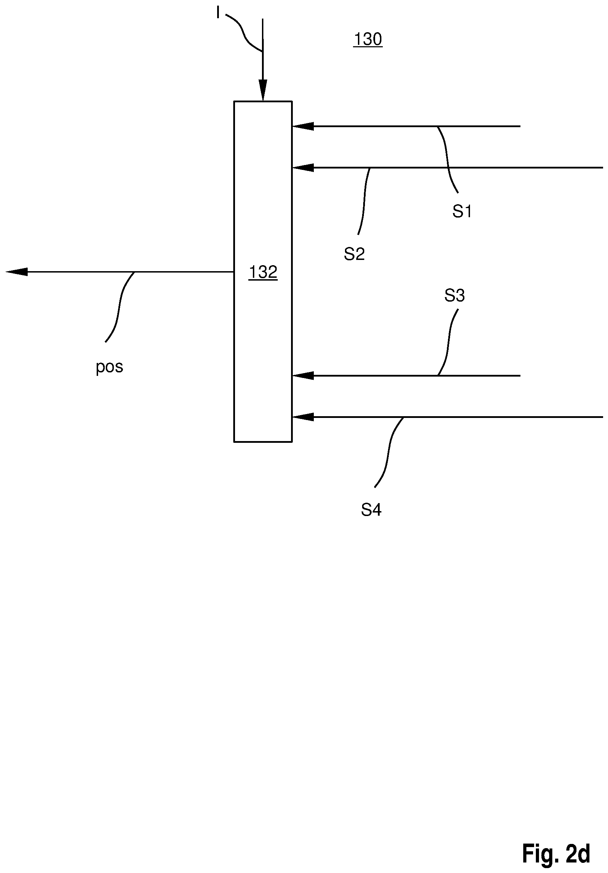

Figur 2d zeigt ein schematisches Blockdiagramm zur Ermittlung der Drehposition pos der Klappenscheibe um deren Drehachse. Die Auswerteeinheit 130 umfasst einen Ermittlungsmodul 132. Das Ermittlungsmodul 132 ermittelt die Drehposition pos in Abhängigkeit von den Sensorsignalen S1, S2, S3, S4, welche von der Sensoranordnung 120 stammen und in Abhängigkeit von einem Antriebsstrom I des elektrischen Antriebs. Hierzu werden die zeitlichen Verläufe der Sensorsignale S1 bis S4 sowie der zeitliche Verlauf des Antriebsstroms I aufgenommen. Die Drehposition pos wird durch einen Vergleich der zeitlichen Verläufe der Sensorsignale und des Verlaufs des Antriebsstroms mit Musterverläufen ermittelt, u.U. unter Zuhilfenahme von Algorithmen der künstlichen Intelligenz wie beispielsweise künstlichen neuronalen Netzen. Durch diese Ermittlung der Drehposition können Stellungsanzeigen bzw. entsprechende Drehsensoren entfallen.

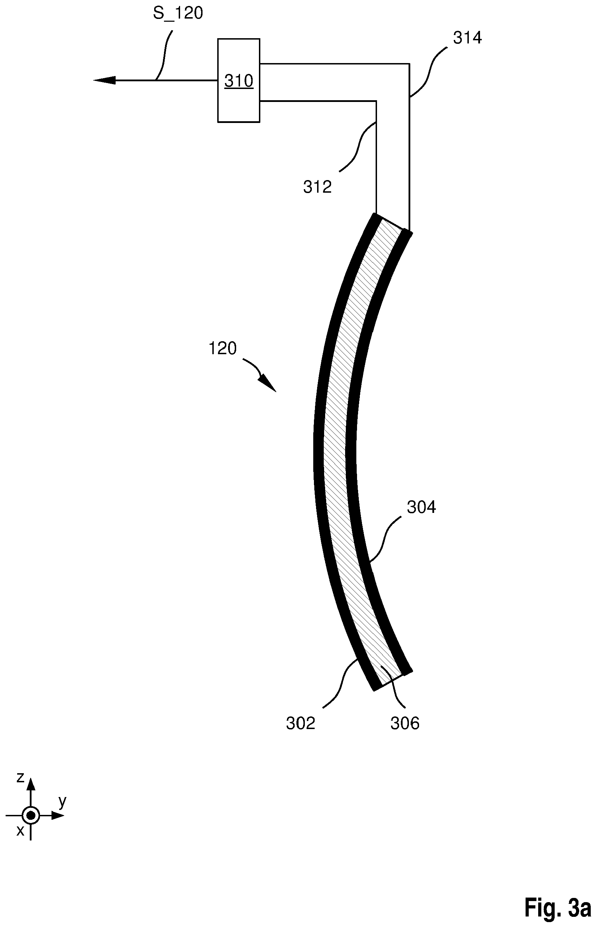

Figur 3a zeigt in schematischer Form eine Struktur des Sensorabschnitts 120. Der wenigstens eine Sensorabschnitt 120 umfasst zur Ermittlung des Sensorsignals S_120 Elektroden 302, 304 und ein zwischen den Elektroden 302, 304 angeordnetes flexibles Dielektrikum 306.

Ein Messglied 310 ist über separate Signalleitungen 312 und 314 mit den Elektroden 302 und 304 verbunden und erzeugt das Signal S_120. Das Messglied 310 ist beispielsweise Teil der Auswerteeinheit.

Der Sensorabschnitt 120 ist beispielsweise auf der nach außen orientierten Oberfläche der Dichtmanschette angeordnet beispielsweise aufgeklebt. Erfindungsgemäß ist der Sensorabschnitt 120 auf einem von dem Armaturkörper und der Dichtmanschette separaten Trägerelement angeordnet.

Das Dielektrikum 306 folgt abschnittsweise einer gedachten Kreiszylindermantelfläche eines gedachten Kreiszylinders, dessen Zylinderachse mit der entlang einer Fluidflussrichtung orientierten Mittenachse M der Absperrklappe 100 zusammenfällt. Die Elektroden 302, 304 können flächig ausgeführt sein oder beispielsweise mäanderförmig auf dem Dielektrikum angeordnet sein.

Das Elastizitäts- und/oder Kompressionsmodul des Sensors ist in einem Beispiel höher-, oder gleichwertig als das Elastizitäts- und/oder Kompressionsmodul der Dichtmanschette. Dadurch wird ein feinfühligeres Messen im Sinne einer erhöhten Sensitivität und damit eine höherwertige Auflösung am Sensor möglich.

Das Elastizitäts- und/oder Kompressionsmodul des Sensors ist in einem anderen Beispiel kleiner als das Elastizitäts- und/oder Kompressionsmodul der Dichtmanschette. Dadurch werden nur bestimmte grobe Änderungen der Ursprungskraft gemessen.

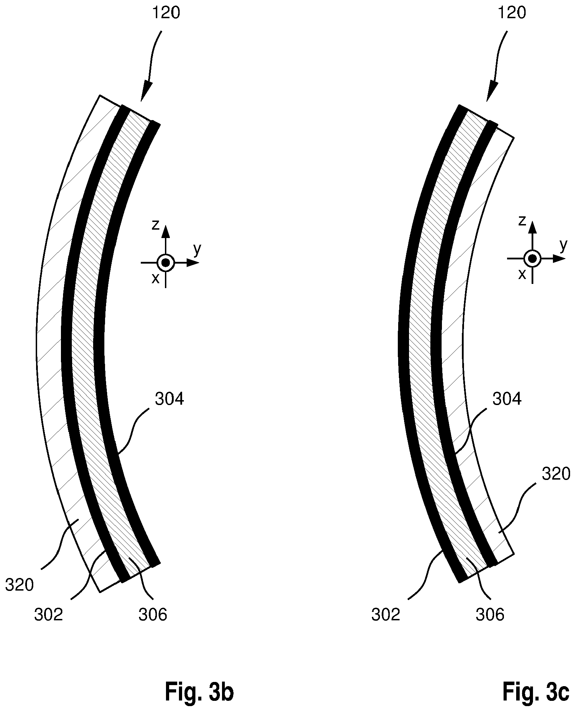

Figuren 3b und 3c zeigen in einem schematischen Schnitt die Anordnung des Sensorabschnitts 120 auf einem jeweiligen Trägerelement 320. Das mit dem Armaturkörper verbindbare Trägerelement 320, welches den wenigstens einen Sensorabschnitt 120 der Sensoranordnung umfasst. Das wenigstens eine Trägerelement 320 ist gekrümmt und folgt einer gedachten Kreiszylindermantelfläche. Der dem Trägerelement 320 wenigstens eine zugeordnete Sensorabschnitt 120 ist beispielsweise als Folie ausgebildet und mit dem Trägerelement 320 verklebt. Gemeinsam mit dem Sensorelement 120 erstreckt sich das wenigstens eine Trägerelement 320 flächig zwischen der nach außen gewandten Oberfläche der Dichtmanschette und der nach innen gewandten Oberfläche des Armaturkörpers.

Alternativ aber nicht erfindungsgemäß wird der wenigstens eine Sensorabschnitt direkt auf der Dichtmanschette angeordnet, was eine kostengünstige Direktmontage und Verwendung darstellt.

In Figur 3b ist der Sensorabschnitt 120 auf einer konkav gekrümmten Oberfläche des Trägerelements 320 angeordnet. Im eingebauten Zustand ist der wenigstens eine Sensorabschnitt 120 zwischen dem Trägerelement 320 und der nach außen gewandten Oberfläche der Dichtmanschette angeordnet.

In Figur 3c ist der Sensorabschnitt 120 auf einer konvex gekrümmten Oberfläche des Trägerelements 320 angeordnet. Im eingebauten Zustand des Sensorabschnitts 120 ist der wenigstens eine Sensorabschnitt 120 zwischen dem Trägerelement 320 und der nach innen gewandten Oberfläche des Armaturkörpers angeordnet.

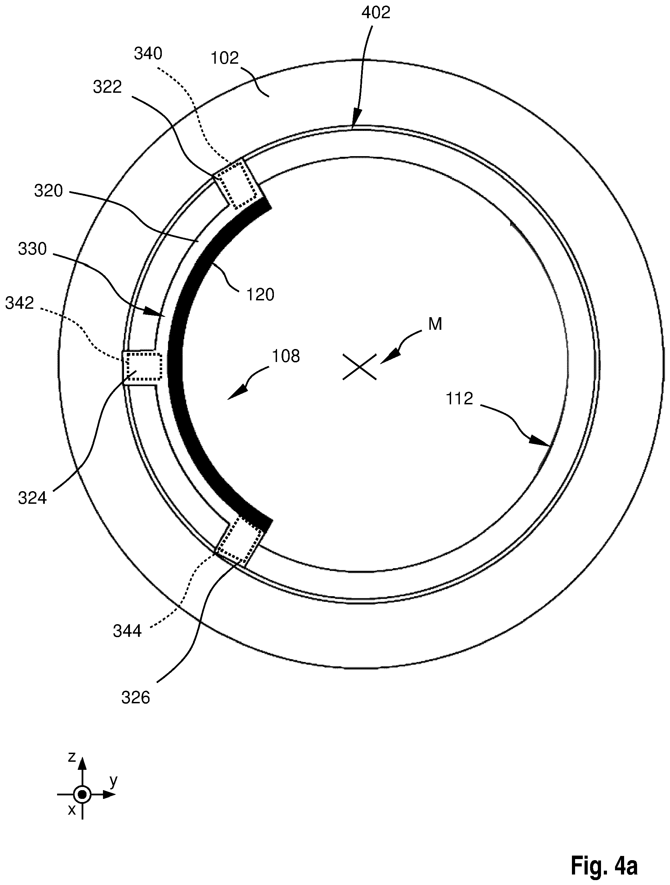

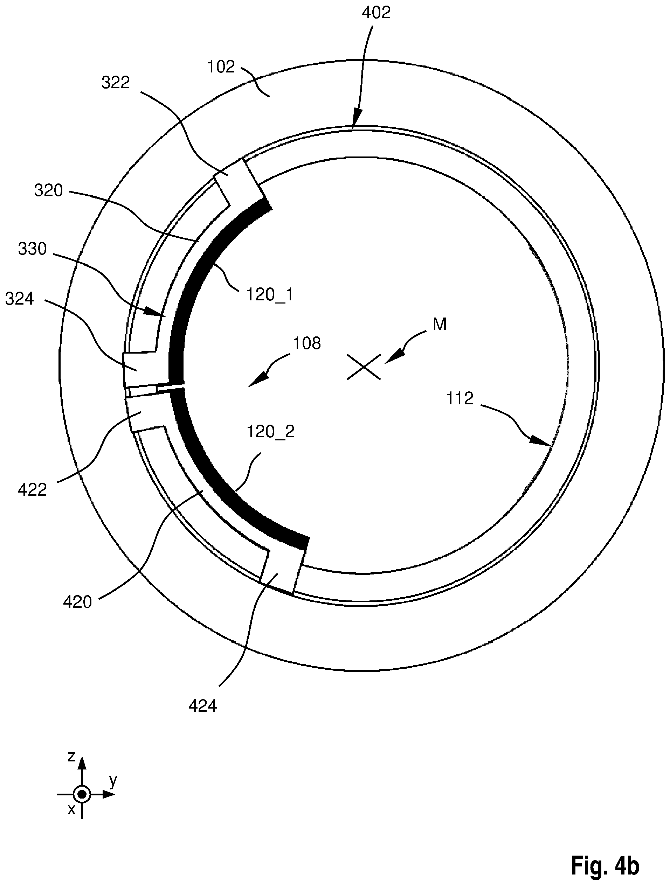

Figuren 4a und 4b zeigen die Anordnung des wenigstens einen Trägerelements 320 mit dem wenigstens einen Sensorelement gemäß dem Sensorabschnitt 120 an dem Armaturkörper 102. Das wenigstens eine Trägerelement 320 ist formschlüssig und/oder lösbar mit dem Armaturkörper 102 verbunden.

Das wenigstens eine Trägerelement 320, 420 umfasst eine Mehrzahl von entlang wenigstens einer ersten Längsseite 330 voneinander beabstandeten Rastabschnitten 322, 324, 326, 422, 424, welche in wenigstens eine zugeordnete Ausnehmung 402 des Armaturkörpers 102 eingreifen. Die Rastabschnitte 322, 324, 326 ragen radial nach außen von einem Verbindungsabschnitt zur Verbindung mit dem Sensorabschnitt 120 ab. Die Rastabschnitte 322, 324, 326, 422, 424 werden mittels eines jeweiligen Vorsprungs in die Ausnehmung 402 bzw. Nut eingeclipst und sind damit lösbar mit dem Armaturkörper 102 verbunden.

Das Trägerelement 320 umfasst in einem nicht gezeigten Beispiel eine Mehrzahl von entlang einer weiteren bzw. zweiten Längsseite voneinander beabstandeten Rastabschnitten analog zu den Rastabschnitten 322, 324, 326. Die zweite Längsseite des Trägerelements 320 ist also analog zur in der Sicht der Figur 4a und 4b sichtbaren ersten Längsseite 330 ausgebildet und erstreckt sich in Umfangsrichtung und radial gleich weit beabstandet von der Mittenachse M.

Das Trägerelement 320 umfasst in einem alternativen Beispiel auf der weiteren bzw. zweiten Längsseite ein einziges abragendes Halteelement wie beispielsweise einen Steg, der in eine entsprechende Ausnehmung des Armaturkörpers 102 eingreift.

Die Sensoranordnung 108 umfasst des Weiteren sich in einer Lotebene der Mittenachse M zwischen der Dichtmanschette 106 und dem Armaturkörpers 102 erstreckenden Sensorabschnitte 340, 342, 344, welche an dem jeweiligen Rastabschnitt 322, 324, 326 angeordnet sind. Die Sensorabschnitte 340, 342, 344 können separiert von oder verbunden mit dem Sensorabschnitt 120 ausgeführt sein.

Die Sensorabschnitte 340, 342, 344 sind schematisch dargestellt. So schließen beispielsweise schmalseitige Randbereiche der Sensorabschnitte 340, 342, 344 mit schmalseitigen Randbereichen des jeweils zugeordneten Rastabschnitts 322, 324, 326 bündig ab.

Die Sensorabschnitte 340, 342, 344 können die in Figur 4a gezeigten Umrisse aufweisen und separat ausgeführt sein.

In einem nicht gezeigten Beispiel gehen die Sensorabschnitte 340, 342, 344 radial nach innen in den Sensorabschnitt 120 über.

In einem anderen nicht gezeigten Beispiel überdeckt ein sich in der Lotebene der Mittenachse erstreckender Sensorabschnitt die Längsseite 330 des Trägerelements 320.

Die Sensorabschnitte 340, 342, 344 umfassen den in der Figur 3a gezeigten Schichtaufbau. Die Sensorabschnitte 340, 342, 344 dienen zur Erzeugung eines Sensorsignals, welches eine auf den Sensorabschnitt 340, 342, 344 wirkende Kraft charakterisiert. Damit werden Kräfte die parallel zur Mittenachse M gemessen. So können Fluchtungsfehler der Flansche, die korrekte Montage und im Betrieb veränderte Eigenschaften der Dichtmanschette ermittelt werden.

Figur 4b zeigt zwei umfangsseitig verteilt angeordnete Sensorabschnitte 120_1, 120_2, die auf einem jeweiligen Trägerelement 320, 420 angeordnet sind.

## Patentansprüche

1. Eine Absperrklappe (100) umfassend:
einen Armaturkörper (102);
eine innerhalb einer Durchgangsöffnung des Armaturkörpers (102) angeordnete und einen inneren Durchflussraum (104) für Prozessfluid begrenzende Dichtmanschette (106); und
einer Sensoranordnung (108) mit wenigstens einem sich flächig zwischen einer nach außen gewandten Oberfläche (110) der Dichtmanschette (106) und einer nach innen gewandten Oberfläche (112) des Armaturkörpers (102) erstreckenden Sensorabschnitt (120) zur Erzeugung eines Sensorsignals (S_120), **dadurch gekennzeichnet, dass** das Sensorsignal (S_120) eine auf den Sensorabschnitt (120) wirkende Kraft charakterisiert, wobei wenigstens ein mit dem Armaturkörper (102) verbindbares und von dem Armaturkörper (102) und der Dichtmanschette (106) separates Trägerelement (320) den wenigstens einen Sensorabschnitt (120) der Sensoranordnung (108) umfasst.

2. Die Absperrklappe (100) gemäß dem Anspruch 1, wobei die Sensoranordnung (108) umfasst:
eine Mehrzahl von sich flächig zwischen der jeweiligen nach außen gewandten Oberfläche (110) der Dichtmanschette (106) und der jeweiligen nach innen gewandten Oberfläche (112) des Armaturkörpers (102) erstreckenden Sensorabschnitten (120_A1, 120_A2, 120_B1, 120_B2) zur Erzeugung eines jeweiligen Sensorsignals (S_120_A1, S_120_A2, S_120_B1, S_120_B2), welches eine auf den jeweiligen Sensorabschnitt (120_A1, 120_A2, 120_B1, 120_B2) wirkende Kraft charakterisiert.

3. Die Absperrklappe (100) gemäß dem Anspruch 2, wobei wenigstens eine Gruppe (A; B) von Sensorabschnitten (120_A1, 120_A2; 120_B1, 120_B2) über einen inneren Umfang des Armaturkörpers (102) verteilt zwischen der Dichtmanschette (106) und dem Armaturkörper (102) angeordnet sind.

4. Die Absperrklappe (100) gemäß dem Anspruch 2 oder 3, wobei wenigstens eine Gruppe (1; 2) von Sensorabschnitten (120_A1, 120_B1; 120_A2, 120_B2) parallel zu einer Mittenachse (M) der Absperrklappe (100) verteilt zwischen der Dichtmanschette (106) und dem Armaturkörper (102) angeordnet sind.

5. Die Absperrklappe (100) gemäß dem Anspruch 4, wobei die Gruppe (1; 2) von Sensorabschnitten (120_A1, 120_B1; 120_A2, 120_B2) durch eine zur Mittenachse (M) lotrecht verlaufende und in einer Rotationsachse (R) einer Klappenscheibe (122) liegende gedachte Ebene (202) voneinander getrennt sind.

6. Die Absperrklappe (100) gemäß einem der vorigen Ansprüche, wobei der wenigstens eine Sensorabschnitt (120) zur Ermittlung des Sensorsignals (S_120) Elektroden (302, 304) und ein zwischen den Elektroden (302, 304) angeordnetes flexibles Dielektrikum (306) umfasst.

7. Die Absperrklappe (100) gemäß dem Anspruch 6, wobei das Dielektrikum (306) abschnittsweise einer gedachten Kreiszylindermantelfläche eines gedachten Kreiszylinders folgt, dessen Zylinderachse mit der Mittenachse (M) der Absperrklappe (100) zusammenfällt.

8. Die Absperrklappe (100) gemäß dem Anspruch 6 oder 7, wobei ein Elastizitätsmodul der Dichtmanschette (106) kleiner als ein Elastizitätsmodul des Dielektrikums (306) ist.

9. Die Absperrklappe (100) gemäß dem Anspruch 6 oder 7, wobei ein Elastizitätsmodul der Dichtmanschette (106) größer oder gleich als ein Elastizitätsmodul des Dielektrikums (306) ist.

10. Die Absperrklappe (100) gemäß einem der vorigen Ansprüche umfassend:
eine verdrehbare und zur Begrenzung eines Flusses eines Prozessfluids ausgebildete Klappenscheibe (122);
einen Drehsensor (128), welcher zur Ermittlung einer Drehposition (S_128) der Klappenscheibe (122) ausgebildet ist;
eine Auswerteeinheit (130), welche zur Ermittlung eines die Belastung der Dichtmanschette (106) charakterisierenden Indikators (IND) in Abhängigkeit von der Drehposition (S_126) und in Abhängigkeit von dem wenigstens einen Sensorsignal (S_120) des Sensorabschnitts (120) eingerichtet ist.

11. Die Absperrklappe (100) gemäß dem Anspruch 10, wobei der Indikator (IND) eine Scherbeanspruchung der Dichtmanschette (106) indiziert, wenn mittels des Sensorsignals (S_120) des wenigstens einen Sensorabschnitts (120) eine über einen Zeitraum sich verändernde Kraft und mittels des Drehsensors (128) eine in dem Zeitraum erfolgende Drehbewegung der Klappenscheibe (122) ermittelt wird.

12. Die Absperrklappe (100) gemäß dem Anspruch 1, wobei das wenigstens eine Trägerelement (320) formschlüssig und/oder lösbar mit dem Armaturkörper (102) verbunden ist.

13. Die Absperrklappe (100) gemäß dem Anspruch 1 oder 12, wobei das wenigstens eine Trägerelement (320; 420) eine Mehrzahl von entlang wenigstens einer Längsseite voneinander beabstandeten Rastabschnitten (322, 324, 326; 422, 424), welche in wenigstens eine zugeordnete Ausnehmung (402) des Armaturkörpers (102) eingreifen, umfasst.

14. Die Absperrklappe (100) gemäß einem der Ansprüche 1 und 12 bis 13, wobei der wenigstens eine Sensorabschnitt (120) zwischen dem Trägerelement (320) und der nach außen gewandten Oberfläche (110) der Dichtmanschette (106) angeordnet ist.

15. Die Absperrklappe (100) gemäß einem der Ansprüche 1 und 12 bis 13, wobei der wenigstens eine Sensorabschnitt (120) zwischen dem Trägerelement (320) und der nach innen gewandten Oberfläche (112) des Armaturkörpers (102) angeordnet ist.

16. Die Absperrklappe (100) gemäß einem der vorigen Ansprüche umfassend:
die Sensoranordnung (108) mit wenigstens einem sich flächig in einer Lotebene der Mittenachse (M) zwischen der Dichtmanschette (106) und dem Armaturkörpers (102) erstreckenden Sensorabschnitt (340, 342, 344) zur Erzeugung eines Sensorsignals (S_340), welches eine auf den Sensorabschnitt (340, 342, 344) wirkende Kraft charakterisiert.

## Claims

1. Butterfly valve (100) comprising:
a fitting body (102);
a sealing sleeve (106) arranged within a through-opening of the fitting body (102) and delimiting an inner flow space (104) for process fluid; and
a sensor arrangement (108) having at least one sensor portion (120) which extends flatly between an outward-facing surface (110) of the sealing sleeve (106) and an inward-facing surface (112) of the fitting body (102) for generating a sensor signal (S_120), **characterized in that** the sensor signal (S_120) characterizes a force acting on the sensor portion (120), at least one support element (320) which can be connected to the butterfly valve (102) and is separate from the butterfly valve (102) and the sealing sleeve (106) comprising the at least one sensor portion (120) of the sensor arrangement (108).

2. Butterfly valve (100) according to claim 1, the sensor arrangement (108) comprising:
a plurality of sensor portions (120_A1, 120_A2, 120_B1, 120_B2) extending flatly between the relevant outward-facing surface (110) of the sealing sleeve (106) and the relevant inward-facing surface (112) of the fitting body (102) for generating a relevant sensor signal (S_120_A1, S_120_A2, S_120_B1, S_120_B2) which characterizes a force acting on the relevant sensor portion (120_A1, 120_A2, 120_B1, 120_B2).

3. Butterfly valve (100) according to claim 2, at least one group (A; B) of sensor portions (120_A1, 120_A2; 120_B1, 120_B2) being arranged between the sealing sleeve (106) and the fitting body (102) so as to be distributed over an inner circumference of the fitting body (102).

4. Butterfly valve (100) according to claim 2 or claim 3, at least one group (1; 2) of sensor portions (120_A1, 120_B1; 120_A2, 120_B2) being arranged between the sealing sleeve (106) and the fitting body (102) so as to be distributed parallel to a central axis (M) of the butterfly valve (100).

5. Butterfly valve (100) according to claim 4, the group (1; 2) of sensor portions (120_A1, 120_B1; 120_A2, 120_B2) being separated from one another by an imaginary plane (202) which extends perpendicularly to the central axis (M) and lies in an axis of rotation (R) of a valve disk (122).

6. Butterfly valve (100) according to any of the preceding claims, the at least one sensor portion (120), for determining the sensor signal (S_120), comprising electrodes (302, 304) and a flexible dielectric (306) which is arranged between the electrodes (302, 304).

7. Butterfly valve (100) according to claim 6, the dielectric (306) following an imaginary circular cylinder lateral surface of an imaginary circular cylinder, the cylinder axis of which coincides with the central axis (M) of the butterfly valve (100).

8. Butterfly valve (100) according to claim 6 or claim 7, a modulus of elasticity of the sealing sleeve (106) being less than a modulus of elasticity of the dielectric (306).

9. Butterfly valve (100) according to claim 6 or claim 7, a modulus of elasticity of the sealing sleeve (106) being greater than or equal to a modulus of elasticity of the dielectric (306).

10. Butterfly valve (100) according to any of the preceding claims, comprising:
a rotatable valve disk (122) which is designed to limit a flow of a process fluid;
a rotation sensor (128) which is designed to determine a rotational position (S_128) of the valve disk (122);
an evaluation unit (130) which is designed to determine an indicator (IND) which characterizes the load on the sealing sleeve (106) on the basis of the rotational position (S_126) and on the basis of the at least one sensor signal (S_120) of the sensor portion (120).

11. Butterfly valve (100) according to claim 10, the indicator (IND) indicating a shear stress on the sealing sleeve (106) when a force which changes over a period of time is detected by means of the sensor signal (S_120) of the at least one sensor portion (120) and a rotational movement of the valve disk (122) occurring during this period of time is detected by means of the rotation sensor (128).

12. Butterfly valve (100) according to claim 1, the at least one support element (320) being form-fittingly and/or releasably connected to the fitting body (102).

13. Butterfly valve (100) according to claim 1 or claim 12, the at least one support element (320; 420) comprising a plurality of latching portions (322, 324, 326; 422, 424) which are spaced apart along at least one longitudinal side and which engage in at least one associated recess (402) of the fitting body (102).

14. Butterfly valve (100) according to any of claim 1 and claim 12 to claim 13, the at least one sensor portion (120) being arranged between the support element (320) and the outward-facing surface (110) of the sealing sleeve (106).

15. Butterfly valve (100) according to any of claim 1 and claim 12 to claim 13, the at least one sensor portion (120) being arranged between the support element (320) and the inward-facing surface (112) of the fitting body (102) .

16. Butterfly valve (100) according to any of the preceding claims, comprising:
the sensor arrangement (108) having at least one sensor portion (340, 342, 344) which extends flatly in a perpendicular plane of the central axis (M) between the sealing sleeve (106) and the fitting body (102) for generating a sensor signal (S_340) which characterizes a force acting on the sensor portion (340, 342, 344).

## Revendications

1. Papillon (100) comprenant:
un corps de robinetterie (102);
un manchon d'étanchéité (106) qui est disposé à l'intérieur d'une ouverture de passage du corps de robinetterie (102) et délimite un espace d'écoulement interne (104) pour du fluide de processus; et
un ensemble de capteur (108) comprenant au moins une section de capteur (120) s'étendant à plat entre une surface (110) du manchon d'étanchéité (106) qui est tournée vers l'extérieur et une surface (112) du corps de robinetterie (102) qui est tournée vers l'intérieur, et destinée à générer un signal de capteur (S_120), **caractérisé par le fait que** le signal de capteur (S_120) caractérise une force agissant sur la section de capteur (120), dans lequel au moins un élément porteur (320) qui peut être relié au corps de robinetterie (102) et est séparé du corps de robinetterie (102) et du manchon d'étanchéité (106), comprend ladite au moins une section de capteur (120) de l'ensemble de capteur (108).

2. Papillon (100) selon la revendication 1, dans lequel ledit ensemble de capteur (108) comprend:
une pluralité de sections de capteur (120_A1, 120_A2, 120_B1, 120_B2) s'étendant à plat entre la surface (110) respective du manchon d'étanchéité (106) qui est tournée vers l'extérieur et la surface (112) respective du corps de robinetterie (102) qui est tournée vers l'intérieur, et destinées à générer un signal de capteur respectif (S_120_A1, S_120_A2, S_120_B1, S_120_B2) qui caractérise une force agissant sur la section de capteur (120_A1, 120_A2, 120_B1, 120_B2) respective.

3. Papillon (100) selon la revendication 2, dans lequel au moins un groupe (A; B) de sections de capteur (120_A1, 120_A2; 120_B1, 120_B2) sont disposées sur une circonférence interne du corps de robinetterie (102) de manière à être réparties entre le manchon d'étanchéité (106) et le corps de robinetterie (102).

4. Papillon (100) selon la revendication 2 ou 3, dans lequel au moins un groupe (1; 2) de sections de capteur (120_A1, 120_B1; 120_A2, 120_B2) sont disposées parallèlement à un axe central (M) du papillon (100) de manière à être réparties entre le manchon d'étanchéité (106) et le corps de robinetterie (102).

5. Papillon (100) selon la revendication 4, dans lequel le groupe (1; 2) de sections de capteur (120_A1, 120_B1; 120_A2, 120_B2) sont séparées les unes des autres par un plan imaginaire (202) s'étendant perpendiculairement à l'axe central (M) et situé dans un axe de rotation (R) d'un disque de volet (122).

6. Papillon (100) selon l'une quelconque des revendications précédentes, dans lequel ladite au moins une section de capteur (120) comprend des électrodes (302, 304) et un diélectrique flexible (306) disposé entre les électrodes (302, 304) pour déterminer le signal du capteur (S_120).

7. Papillon (100) selon la revendication 6, dans lequel le diélectrique (306) suit par sections une surface latérale de cylindre circulaire imaginaire d'un cylindre circulaire imaginaire dont l'axe de cylindre coïncide avec l'axe central (M) du papillon. (100).

8. Papillon (100) selon la revendication 6 ou 7, dans lequel un module d'élasticité du manchon d'étanchéité (106) est inférieur à un module d'élasticité du diélectrique (306).

9. Papillon (100) selon la revendication 6 ou 7, dans lequel un module d'élasticité du manchon d'étanchéité (106) est supérieur ou égal à un module d'élasticité du diélectrique (306).

10. Papillon (100) selon l'une quelconque des revendications précédentes comprenant:
un disque de volet (122) rotatif et conçu pour limiter un écoulement d'un fluide de processus,
un capteur de rotation (128) qui est conçu pour déterminer une position de rotation (S_128) du disque de volet (122);
une unité d'évaluation (130) qui est configurée pour déterminer un indicateur (IND) caractérisant la charge du manchon d'étanchéité (106) en fonction de la position de rotation (S_126) et en fonction dudit au moins un signal de capteur (S_120) de la section de capteur (120).

11. Papillon (100) selon la revendication 10, dans lequel l'indicateur (IND) indique une contrainte de cisaillement du manchon d'étanchéité (106) lorsqu'on détermine au moyen du signal de capteur (S_120) de ladite au moins une section de capteur (120) une force qui change sur une période de temps et au moyen du capteur de rotation (128) un mouvement de rotation du disque de volet (122) se produisant pendant la période de temps.

12. Papillon (100) selon la revendication 1, dans lequel ledit au moins un élément porteur (320) est relié à engagement positif et/ou de manière amovible au corps de robinetterie (102).

13. Papillon (100) selon la revendication 1 ou 12, dans lequel ledit au moins un élément porteur (320; 420) comprend une pluralité de sections d'arrêt (322, 324, 326; 422, 424) qui sont espacées les unes des autres le long d'au moins un côté longitudinal et qui s'engagent dans au moins un évidement (402) associé du corps de robinetterie (102).

14. Papillon (100) selon l'une quelconque des revendications 1 et 12 à 13, dans lequel ladite au moins une section de capteur (120) est disposée entre l'élément porteur (320) et la surface (110) du manchon d'étanchéité (106) qui est tournée vers l'extérieur.

15. Papillon (100) selon l'une quelconque des revendications 1 et 12 à 13, dans lequel ladite au moins une section de capteur (120) est disposée entre l'élément porteur (320) et la surface (112) du corps de robinetterie (102) qui est tournée vers l'intérieur.

16. Papillon (100) selon l'une quelconque des revendications précédentes, comprenant:
ledit ensemble de capteur (108) comprenant au moins une section de capteur (340, 342, 344) s'étendant à plat dans un plan d'aplomb de l'axe central (M) entre le manchon d'étanchéité (106) et le corps de robinetterie (102) et destinée à générer un signal de capteur (S_340) qui caractérise une force agissant sur la section de capteur (340, 342, 344).
